# EUROPÄISCHE PATENTANMELDUNG

(11) **EP 1 167 844 A2**
(43) Veröffentlichungstag der Anmeldung: **02.01.2002**
(21) Anmeldenummer: 01111488.1
(22) Anmeldetag: 11.05.2001
(51) Int. Cl.: F16K 11/074

(54) **Mehrwegventil**

(30) Priorität: 21.06.2000 DE 10030584
(71) Anmelder: GNEUSS KUNSTSTOFFTECHNIK GmbH, D-32549 Bad Oeynhausen (DE)
(72) Erfinder: Thiele, Ulrich K., Dr., 63486 Bruchköbel (DE); Gneuss, Detlef, 32545 Bad Oeynhausen (DE)
(74) Vertreter: Grosse, Wolf-Dietrich, Dipl.-Ing.

(57) **Zusammenfassung**

Ein Mehrwege-Ventil zur Verteilung und/oder Aufteilung von mindestens einem Zulauf zugeführter Polymehrschmelze während ihrer Herstellung und Verarbeitung, bei dem während jedes Betriebszustands alle Innenkammern des Ventils und der Schmelze durchströmt werden soll so verbessert werden, daß ein totraumfreies Mehrwege-Ventil zur Verfügung steht. Dazu wird vorgeschlagen, daß zwischen einer Frontplatte (1) und einer Rückplatte (2), die jeweils Durchtrittsöffnungen für Eintritt und Austritt der Polymehrschmelze aufweisen, mindestens ein Drehschieber (6) drehbar auf einem Achsbolzen (5) gelagert ist und daß der Drehschieber mit kreissegmentförmigen Kanälen versehen ist, deren Breite und Endrundungen der lichten Weite der Durchtrittsöffnungen entspricht und deren Mittellinie der die Durchtrittsöffnungen aufweisende Teilkreis ist und deren Stellung entsprechend der gewünschten Fließrichtung der Polymehrschmelze positionierbar ist.

## Beschreibung

Bei der Herstellung und Verarbeitung von Polymeren ist in vielen Fällen für eine flexible Prozeßgestaltung die wahlweise Verteilung von Schmelzeströmen auf unterschiedliche Prozeß- oder Verarbeitungsstufen erforderlich.

Die Verteilung von Schmelzeströmen höherer Viskosität, wie z.B. die Verteilung von hochmolekularen Polymerschmelzen aus einer Hauptleitung auf unterschiedliche Verteilerleitungen, bereitet technisch auch heute noch Probleme. Üblicherweise werden für diese Aufgabe Mehrwegventile vorgeschlagen, bei denen durch Kolben die jeweilige Fließrichtung geöffnet oder geschlossen wird. So wird z.B. im US-Patent 5,211,845 ein Polymerventil beschrieben, bei dem die Verschlußkolben V-förmig angeordnet sind, um den beim Wechsel der Fließrichtung auftretenden Totraum so gering wie möglich zu halten. Im Zusammenhang mit der wechselnden Anströmung unterschiedlicher Filterkammern wird im US-Patent 5,928,523 eine Ventilkonstruktion vorgeschlagen, bei der drei Ventilkammern verwendet werden, die beim Wechsel der Ausgangspositionen jeweils geleert und gespült werden müssen.

In der EP-0 962 299 A1 wird ein Mehrweg-Kükenventil beschrieben, dessen Antrieb außerhalb der Beheizung liegt.

Diese auf dem Markt angebotenen Armaturen wie Mehrweg-Kolben- oder -Küken-Ventile haben den Nachteil, daß beim Absperren einer Fließrichtung in den Passungen des Ventiles und im Ventilraum selbst Rückstände der Schmelze verbleiben, die bei längerem Verweilen unter Prozeßtemperatur thermisch abgebaut werden und bei der Wiederbenutzung der Fließrichtung verkohlte Abbauprodukte in die Polymerschmelze gelangen lassen. Außerdem kann die Abdichtung von Ventilen bei Kolbenventilen nur durch die fertigungstechnisch eingestellte Passungen und bei Kükenventilen über das Einpressen der Passung erfolgen. In den Passungen von Kolbenventilen lagern sich ebenfalls Polymerreste ab, werden abgebaut und gelangen bei der Bewegung des Ventils in den Schmelzestrom. Kükenventile neigen durch die schwer zu kontrollierende Flächenpressung ihres Konus zur Schwergängigkeit.

Es besteht deshalb nach wie vor die Aufgabe, zur Verteilung von Schmelzeströmen bei der Herstellung bzw. Verarbeitung von vor allem thermoplastischen Polymeren ein totraumfreies Mehrwege-Ventil zur Verfügung zu stellen, das z.B. wahlweise die Förderung der Schmelze in einer Kreislaufleitung, direkt zum Austrag, bspw. über eine Gießdüse, gestattet, oder mit dem unterschiedliche Schmelzekreisläufe wahlweise trennbar oder verbindbar sind, ohne Schmelzerückstände festhalten zu können.

Um derartige Operationen, wie sie z.B. oft bei diskontinuierlichen Herstellungsprozessen von Polymeren wünschenswert sind, durchführen zu können, ohne die herkömmlichen Nachteile abgelagerter, thermisch abgebauter Schmelzereste in den Ventilkammern oder in den notgedrungen für die Beweglichkeit der Schließelemente erforderlichen Passungen in Kauf zu nehmen, wird gemäß der Erfindung ein Mehrwegventil vorgeschlagen, bei dem in jedem Betriebszustand der Innenraum des Ventils von Schmelze durchströmt wird, so daß Schmelzereste prinzipiell unterbunden sind.

Vorteilhafte, zweckmäßige und erfinderische Weiterbildungen sind den Unteransprüchen zu entnehmen.

Im einzelnen wird die Erfindung anhand der Beschreibung von Ausführungsbeispielen in Verbindung mit diese darstellenden Zeichnungen erläutert. Es zeigen hierbei:
- Fign. 1 und 2: die Ansicht eines Drei-Wege-Ventiles gemäß eines ersten Ausführungsbeispiels mit Drehschieber in einer einen Ausgang speisenden Stellung, sowie ein Spezialschnitt durch das Drei-Wege-Ventil,
- Fign. 3 und 4: die Frontansicht des Drei-Wege-Ventils gemäß des ersten Ausführungsbeispiels der Fign. 1 und 2 nach Umschaltung zur Speisung des Ausgangs, sowie einen Spezialschnitt durch das Drei-Wege-Ventil der Fig. 3,
- Fign. 5 und 6: ein mit zwei parallelen Drehschiebern ausgestattetes Drei-Wege-Ventil gemäß eines zweiten Ausführungsbeispiels in der Ansicht in einer Ausgangsstellung seiner Drehschieber, sowie einen die Drehschieber erfassenden Spezialschnitt,
- Fign. 7 und 8: die Ansicht des Drei-Wege-Ventiles gemäß des zweiten Ausführungsbeispiels der Fig. 5 mit abweichend eingestellten Drehschiebern, sowie einen diese erfassenden Spezialschnitt,
- Fign. 9 und 10: eine Ansicht des Drei-Wege-Ventil gemäß des zweiten Ausführungsbeispiels der Fig. 5 mit weiterhin verstellten Drehschiebern, sowie einen deren Stellung veranschaulichenden Spezialschnitt,
- Fign. 11 und 12: die Ansicht eines zwei Eintritte sowie zwei Austritte aufweisenden Mehrwege-Ventiles gemäß eines dritten Ausführungsbeispiels mit zwei Drehschiebern in einer ersten Schaltstellung mit zugehörigem Schnitt,
- Fign. 13 und 14: das Mehrwege-Ventil gemäß des dritten Ausführungsbeispiels der Fig. 11 mit unterschiedlichen Einstellungen der Drehschieber, und einen zugehörigen Schnitt,
- Fign. 15 und 16: eine Ansicht des Mehrwege-Ventiles gemäß des dritten Ausführungsbeispiels nach Fig. 11 nach weiterer Umstellung der Drehschieber sowie einen deren Stellung entsprechendem Schnitt, und
- Fign. 17 und 18: eine Ansicht eines Ventil gemäß eines vierten Ausführungsbeispiels mit zwei Eintritten und zwei Austritten mit zwei Drehschiebern in Offenstellung.

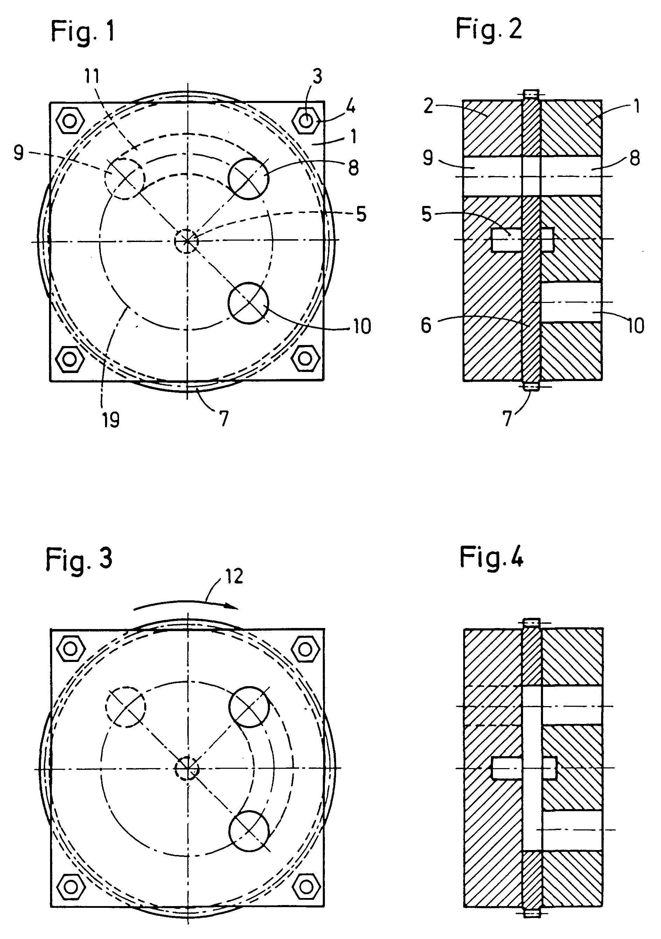

In Fign. 1 bis 4 ist ein Drei-Wege-Ventil mit einem Drehschieber dargestellt, der in einer ersten Stellung den Fließweg der Schmelze von einer Eintrittsöffnung zur ersten Austrittsöffnung freigibt, während nach der Umschaltung dieser Weg gesperrt und der von der Eintrittsöffnung zur zweiten Austrittsöffnung freigegeben wird. Derartige Ventile können bspw. zum Schmelzeaustrag und zur Granulierung verwendet werden, sie können in Verbindung mit Wechselfiltern benutzt werden und gestatten jedwede Probeentnahme.

Im einzelnen ist in Fig. 1 die Frontplatte 1 des Ventilgehäuses gezeigt, die vermittels Spannbolzen 3 und Spannmuttern 4 mit der Gehäuserückplatte 2 spannbar verbunden ist. Die Rückplatte 2 ist gemäß Fign. 1 und 2 mit einem Achsbolzen 5 ausgestattet, der einen zwischen die Frontplatte und die Rückplatte eingebrachten Drehschieber 6 zentrisch hält. Der Drehschieber ist an seinem Umfang mit einem Zahnkranz 7 versehen, der seine Verstellung durch in ihn eingreifende, hier nicht dargestellte Ritzel einer Antriebsvorrichtung erlaubt.

Die Frontplatte ist mit einer Eintrittsöffnung 8 für die Polymerschmelze versehen, und die Frontplatte 1 sowie die Rückplatte 2 weisen je eine Austrittsöffnung auf, wobei die erste Austrittsöffnung 9 gegen die Eintrittsöffnung 8 die gleiche Winkeldifferenz aufweist wie die zweite Austrittsöffnung 10.

Der Drehschieber 6 weist einen eingearbeiteten Schmelzkanal 11 auf, der kreissegmentförmig ausgebildet ist, dessen Mittellinie sich entlang des die Eintrittsöffnung 8 und die Austrittsöffnungen 9 und 10 enthaltenen Teilkreises 19 erstreckt, und deren Enden in Distanz und Abrundung denen der Ein- und Austrittsöffnungen 8, 9 und 10 und deren Abständen entsprechen.

Zur Abdichtung des Gehäuses sind die Innenflächen der Frontplatte 1 sowie der Rückplatte 2 ebenso sorgfältig geschliffen, gehärtet sowie gegebenenfalls oberflächenbehandelt wie der planparallel geschliffene, gehärtete sowie gegebenenfalls oberflächenbehandelte Drehschieber 6. Nach Aufbringen des Drehschiebers 6 auf den Achsbolzen 5 werden die Frontplatte 1 und die Rückplatte 2 mit ihren Innenflächen auf die Oberflächen des Drehschiebers 6 aufgelegt und durch Anziehen der Spannmuttern 4 mittels der Spannbolzen 3 gegeneinander derart verspannt, daß einerseits eine völlige Abdichtung des Schmelzekanales 11 nach außen erfolgt und andererseits die Drehfähigkeit des Drehschiebers 6 erhalten bleibt, wobei das erwähnte, jedoch nicht dargestellte, in den Zahnkranz 7 angreifende Ritzel, bspw. mittels einer Ratsche und eines Stellhebels oder über Hydraulik, die Kraft für die Verstellung der Drehschieber 6 aufzubringen vermag. Die Spannkräfte der Verspannung der Frontplatte 1 gegen die Rückplatte 2 lassen sich mittels der Spannmuttern 4 korrigieren, wobei die äußeren Spannkräfte dem im Ventil herrschenden Druck so anzupassen sind, daß immer die für die Abdichtung erforderliche Preßkraft zur Verfügung steht.

In Abhängigkeit von der zeitlichen Folge der Arbeitstakte des Ventiles kann es vorteilhaft sein, den Drehschieber 6 nach einer bspw. vorher festgelegten Zeit einer taktartigen Vorwärts- und Rückwärtsbewegung zu unterziehen, um eine mögliche Ablagerung der Polymerschmelze auf den Dichtflächen zu unterbinden.

Der tatsächliche Schaltvorgang vollzieht sich wie folgt: Nach Figur 1 ist der Drehschieber 6 derart eingestellt, daß sein Schmelzkanal 11 von der Eintrittsöffnung 8 bis zur Austrittsöffnung 9 reicht und damit das diese passierende Polymer über den ersten Ausgang 9 weitergegeben wird. Während der Verstellung des Drehschiebers 6 im Pfeilsinne 12 rotiert der Drehschieber 6 im Rechtssinne, sein hinteres Ende löst sich von der Austrittsöffnung 9 und fährt die Eintrittsöffnung 8 an, während sein vorderes Ende über die Eintrittsöffnung 8 hinweg schwenkt und die Austrittsöffnung 10 des zweiten Austritts erreicht, wie dieses in Figuren 2 und 4 dargestellt ist. Damit ist die Ventilumschaltung beendet, der einzige Raum, der von der Polymerschmelze erfüllt war, wird auch jetzt noch ausgefüllt, allerdings nicht von stehender und damit alternder Schmelze, sondern stets von von der Eintrittsöffnung her den Schmelzkanal 11 durchfließenden Schmelze, so daß die gestellte Aufgabe gelöst ist, alternde und damit zersetzte Schmelzereste zu vermeiden.

Die Erfindung ist nicht auf einfach gebaute Drei-Wege-Ventile beschränkt, die lediglich als Umschalter wirken. So betrifft das nächste Ausführungsbeispiel ein mit zwei Drehschiebern ausgestattetes Drei-Wege-Ventil, das über eine Eintritts- und zwei Austrittsöffnungen verfügt, und bei der in einer ersten Stellung die erste Austrittsöffnung beaufschlagt wird, in einer zweiten Stellung die zweite Austrittsöffnung gespeist wird, und in einer dritten Stellung die eintretende Schmelze auf beide Austrittsöffnungen aufgeteilt wird. Anwenden läßt sich ein derartiges Drei-Wege-Ventil z.B. für eine Schmelzestromteilung, für Probeentnahmen, für gezielten gesteuerten Schmelzeaustrag, bspw. für die Granulierung, für Wechselfilter oder dergleichen.

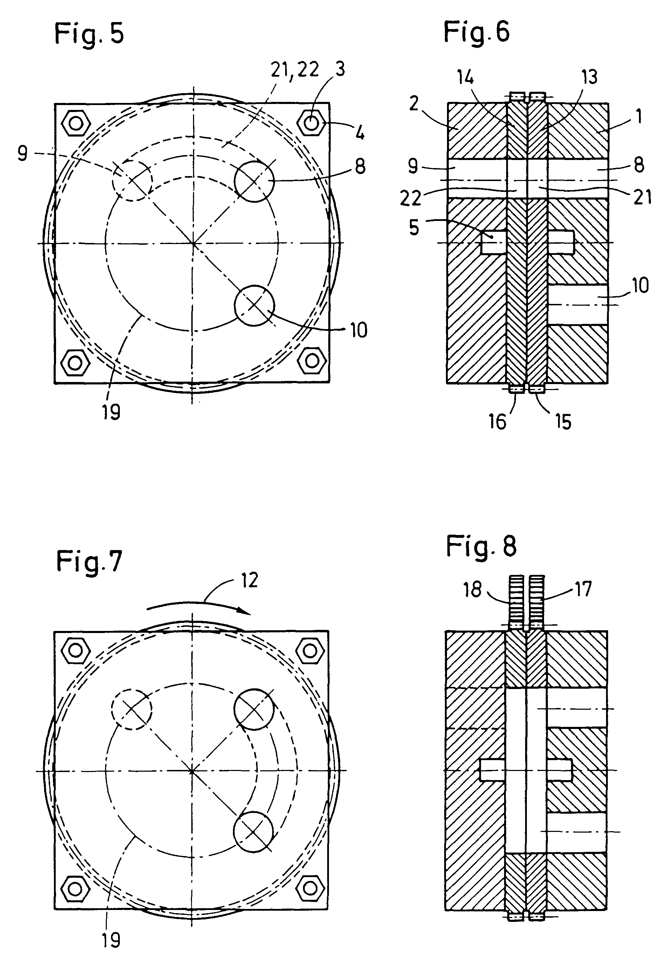

Ausführlich beschrieben wird dieses Ausführungsbeispiel zunächst zu Fign. 5 und 6. Fig. 5 zeigt eine der Fig. 1 entsprechende Ansicht des Drei-Wege-Ventiles mit der Frontplatte 1, die mittels Spannbolzen 3 und Spannmuttern 4 mit der im Schnitt dargestellten Rückplatte 2 verspannt wird. Die Rückplatte 2 ist mit einem Achsbolzen 5 ausgestattet, auf den mit ihren Bohrungen zwei Drehschieber 13 und 14 aufgesteckt sind. Zum Verstellen der Drehschieber 13 und 14 sind diese von Zahnkränzen 15 und 16 umzogen, und nach Fig. 8 greifen in diese Zahnkränze Stirnräder 17 und 18 zu deren Verstellung ein.

Das aus Frontplatte 1 und Rückplatte 2 bestehende Ventilgehäuse ist mit einer Eintrittsöffnung 8 und zwei Austrittsöffnungen 9 und 10 versehen. Wie insbesondere die Ansichten der Fign. 5, 7 und 9 zeigen, sind die Eintrittsöffnung 8 sowie die Austrittsöffnungen 9 und 10 auf einem gemeinsamen Teilkreis 19 derart angeordnet, daß von dem die Eintrittsöffnung 8 schneidenden Radius die Austrittsöffnungen 9 und 10 nach unterschiedlichen Seiten um gleiche Winkel entfernt vorgesehen sind. Die Schmelzkanäle 21 und 22 der Drehschieber 13 und 14 sind in der Breite der Durchmesser der Anschlußbohrungen gehalten. Sie erstrecken sich von einer der Anschlußbohrungen bis zur nächsten, wobei die Abschlußhalbkreise den Lichträumen der Anschlußbohrungen entsprechen. Damit wird erreicht, daß die Kanäle ohne Toträume voll von der jeweiligen Schmelzeströmung genutzt werden.

Wie bereits zum Ausführungsbeispiel 1 erläutert, sind die Innenflächen der Frontplatte 1 und der Rückplatte 2 exakt geschliffen, gehärtet und gegebenenfalls weiterhin oberflächenbehandelt, und das gleiche gilt für die planparallel geschliffenen Flächen der Drehschieber 13 und 14. Nach entsprechendem, gleichmäßigem Spannen der Spannmutter 4 sind die Frontplatte 1 und die Rückplatte 2 derart gegen die Flächen der Drehschieber 13, 14 gespannt, daß ein auch bei hohem Innendruck abgedichtetes Gehäuse vorliegt, jedoch die Drehschieber sich noch betätigen lassen.

Die Aufsicht der Fig. 5 zeigt die Eintrittsöffnung 8 der Frontplatte 1 sowie deren zweite Austrittsöffnung 10. Die Rückplatte 2 ist mit der ersten Austrittsöffnung 9 versehen. Die Drehschieber 13 und 14 sind so eingestellt, daß ihre Kanäle 21 und 22 sich parallel jeweils von der Eintrittsöffnung 8 bis zur ersten Austrittsöffnung 9 erstrecken. Damit ist zwischen der Eintrittsöffnung 8 und der Austrittsöffnung 9 durch die Kanäle 21, 22 eine Verbindung geschaffen, die voll von der Polymerschmelze durchflossen ist und keine Toträume enthält, so daß keinerlei Reste und Rückstände möglich sind.

Um das Ventil auf den zweiten Austritt 10 umzuschalten, werden beide Drehschieber 13 und 14 im Sinne des Pfeiles 12 gedreht. Hierbei werden die Kanäle 21 und 22 von der ersten Austrittsöffnung 9 weggezogen und überbrücken nunmehr die Eintrittsöffnung 8 und die zweite Austrittsöffnung 10. So ergibt sich wiederum eine Schmelzeströmung ohne Toträume, welche Schmelzeanteile zurückhalten könnten, die sich thermisch zersetzen würden. Fig. 8 zeigt den entsprechenden Schnitt, der wiederum im Bereich der Kanäle 21 und 22 entlang des Teilkreises 19 der Anschlüsse geführt ist. Der Fig. 8 sind weiterhin Stirnräder 17 und 18 zu entnehmen, die in die Zahnkränze 15 und 16 der Drehschieber 13 und 14 eingreifen und deren Antrieb bewirken.

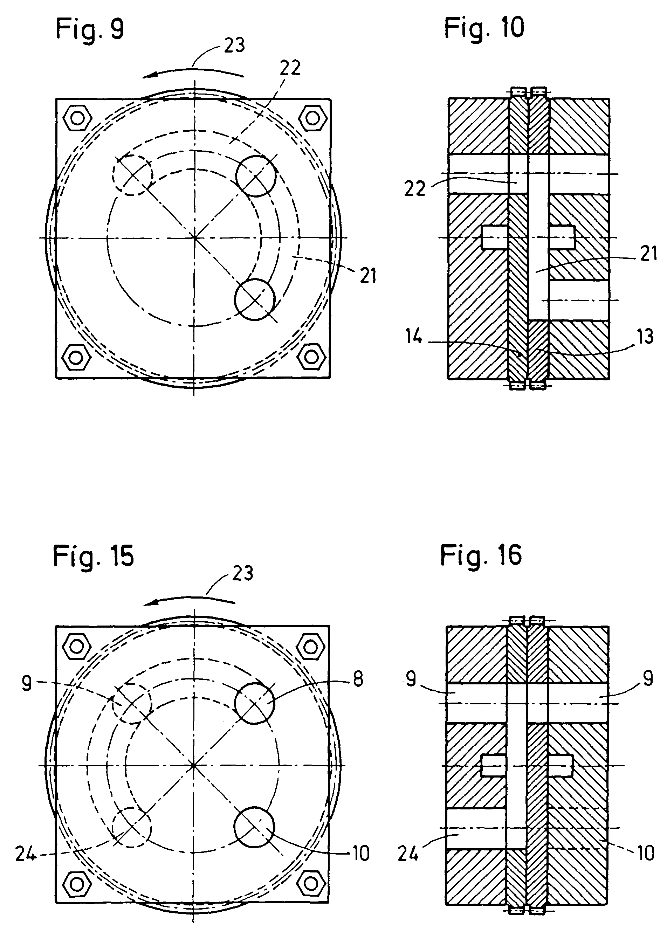

Eine dritte Schaltstellung des Drei-Wege-Ventiles der Fig. 5 wird in Fign. 9 und 10 erläutert. Der Drehschieber 14 verbleibt in seiner bereits in Fign. 5 und 6 dargestellten Lage, und sein Kanal 22 ergibt eine erste Verbindung zwischen der Eintrittsöffnung 8 und der ersten Austrittsöffnung 9. Der Drehschieber 13 dagegen wird im Sinne des Pfeiles 23 betätigt, so daß sein Kanal 21 die Eintrittsöffnung 8 mit der zweiten Austrittsöffnung 10 in Verbindung bringt. Damit werden beide Austrittsöffnungen vom Schmelzestrom beaufschlagt, der demnach innerhalb des Drei-Wege-Ventiles von einem Eingang auf zwei Ausgänge aufgeteilt wird.

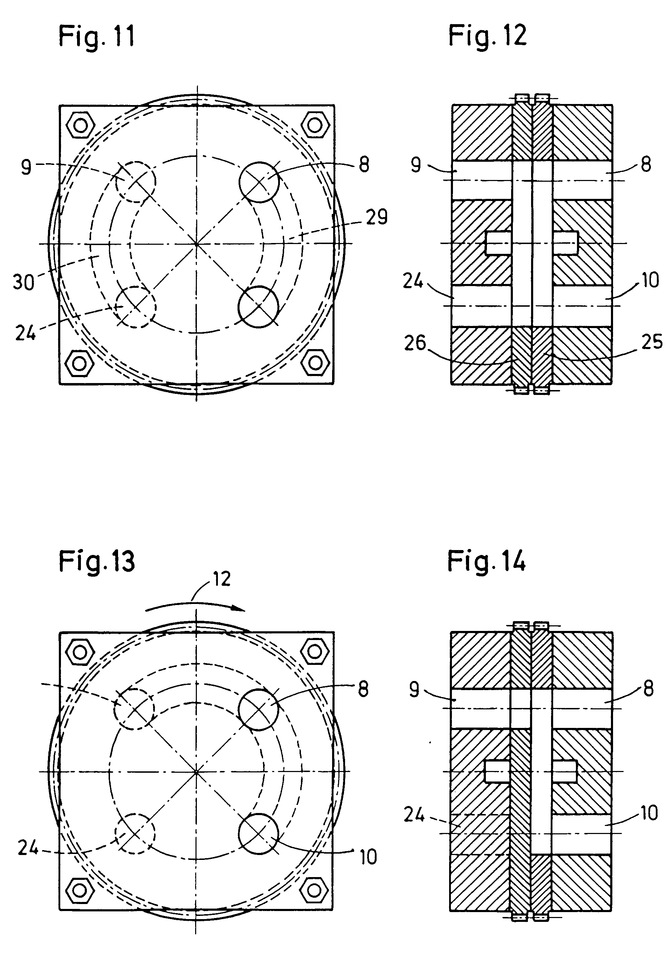

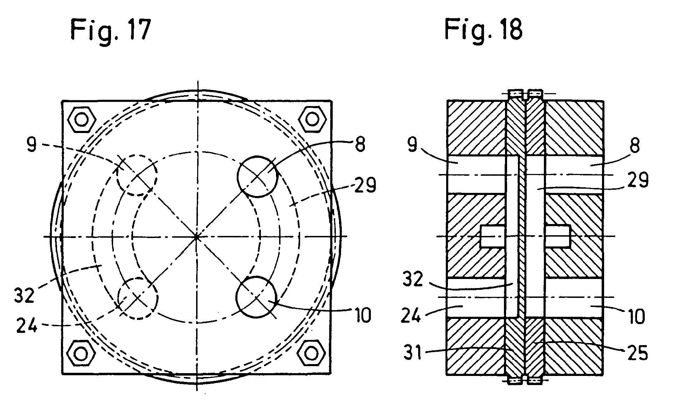

Weitere Möglichkeiten ergeben sich mit einem dritten Ausführungsbeispiel, das wiederum ein Mehrwege-Ventil mit zwei Drehschiebern darstellt. Hier sind zwei Eintritts- sowie zwei Austrittsöffnungen vorgesehen, und in der ersten Schaltstellung wird die erste Eintrittsöffnung 8 mit der ersten Austrittsöffnung 9 verbunden, und getrennt hiervon wird die zweite Eintrittsöffnung 24 mit der zweiten Austrittsöffnung 10 verbunden, so daß zwei geschaltete Schmelzewege entstehen. In einer zweiten Schaltstellung der Fign. 13 und 14 ist der zweite Schmelzeeintritt 24 abgesperrt, und die erste Eintrittsöffnung 8 ist zur Aufteilung des Schmelzestromes mit den beiden Austrittsöffnungen 9 und 10 verbunden. In einer weiteren Schaltstellung der Fign. 15 und 16 sind beide Eintrittsöffnungen 8 und 20 zur Mischung zweiter Schmelzeströme mit der ersten Austrittsöffnung 9 verbunden. Anwendungsgebiete sind z.B. eine sequenzielle Verbindung zweier sonst getrennter Schmelzekreisläufe, die Möglichkeit des Kreuzens von Schmelzeströmen sowie eine Zusammenführung zweier Schmelzen.

Auch hier werden eine Frontplatte 1 und eine Rückplatte 2 gemäß Fign. 11 und 12 über zwei Drehschieber 25, 26 gegeneinander dichtend so verspannt, daß eine Bewegung der Drehschieber durch eine an deren Zahnkränze 27, 28 angesetzte Antriebsvorrichtung noch verstellbar sind. Wie bei allen anderen Ausführungsbeispielen auch besteht die Möglichkeit der Einstellung nach Maß oder Anzeige, es besteht aber auch die Möglichkeit, die Schwenkfähigkeit der Drehschieber durch Anschläge zu begrenzen und damit die Endpunkte der Bewegung festzulegen.

Wie die Frontansicht der Fig. 11 sowie der Spezialschnitt der Fig. 12 zeigen, ist die Frontplatte 1 mit einer ersten Eintrittsöffnung 8 sowie einer ersten Austrittsöffnung 10 bestückt, während die Rückplatte 2 eine zweite Eintrittsöffnung 24 sowie eine zweite Austrittsöffnung 9 aufweist.

Fign. 11 und 12 zeigen gleichzeitig, daß in der ersten Stellung des Mehrwege-Ventiles die Anschlußöffnungen 8 und 10 der Frontplatte 1 durch den Kanal 29 des Drehschiebers 25 miteinander verbunden sind, während gleichzeitig der Kanal 30 des Drehschiebers 26 die beiden Anschlußöffnungen 9 und 24 der Rückplatte 2 verbindet. Da die Kanäle in der Breite der Anschlußöffnungen ausgeführt sind, in ihrer Länge dem Abstand der Anschlußbohrungen entsprechen und mit ihren Endabschnitten dem freien Querschnitt dieser Anschlußbohrungen angepaßt sind, ist auch hier kein Totraum zu befürchten, und die Gefahr sich zersetzender Schmelzereste besteht daher nicht.

In Fign. 13 und 14 wird das gleiche Mehrwege-Ventil nach einer ersten Umschaltung gezeigt: Der Drehschieber 25 ist in seiner ursprünglichen Stellung verblieben, dagegen der Drehschieber 26 ist im Rechtssinne um die Winkelteilung der Anordnung der Anschlußbohrungen im Sinne des Pfeiles 12 geschwenkt. Der Kanal 29 verbindet damit die Eintrittsöffnung 8 mit der Austrittsöffnung 10; hinzu aber wird durch den Kanal 30 des Drehschiebers 26 eine Verbindung zwischen der Austrittsöffnung 9 und der Eintrittsöffnung 24 gebildet. Zur weiteren Umschaltung werden nunmehr beide Drehschieber 25 und 26 gegenüber Fig. 13 um jeweils eine Teilung der Anschlußöffnungen in Pfeilrichtung 23 geschaltet, und damit werden sowohl die erste Eintrittsöffnung 8 als auch die zweite Eintrittsöffnung 24 auf die Austrittsöffnung 9 geschaltet, d.h. Schmelze wird beiden Eintrittsöffnungen zugeführt und im Mehrwege-Ventil gemäß Fign. 15 und 16 gemischt und über nur einen Ausgang 9 weitergegeben. Auch hier wieder sind die Kanäle 29 und 30 stets von der Schmelzeströmung ausgefüllt, so daß zur Speicherung, Alterung und Zersetzung von Schmelzeresten keine Möglichkeit besteht.

In den Figuren 17 und 18 ist ein Ventil mit Eintrittsöffnungen 8 und 24 sowie Austrittsöffnungen 9 und 10 gezeigt. Das Ventil besitzt Drehschieber 25 und 31, wobei der Drehschieber 25 den Kanal 29 und der Drehschieber 31 den Kanal 32 aufweist. Der Kanal 29 durchdringt den Drehschieber 25 komplett, während der Kanal 32 in Form einer Sacknut nur teilweise in den Drehschieber 31 eindringt. Damit lassen sich lediglich Verbindungen zwischen dem Eintritt 24 und dem Austritt 9 einerseits und dem Eintritt 8 und dem Austritt 10 andererseits herstellen. Die Drehschieber 25, 31 lassen sich somit nur als Öffner bzw. Schließer betätigen.

### Bezugszeichenliste

- 1.: Frontplatte
- 2.: Rückplatte
- 3.: Spannbolzen
- 4.: Spannmutter
- 5.: Achsbolzen
- 6.: Drehschieber
- 7.: Zahnkranz
- 8.: Eintrittsöffnung
- 9.: Austrittsöffnung
- 10.: Austrittsöffnung
- 11.: Schmelzekanal
- 12.: Pfeil
- 13.: Drehschieber
- 14.: Drehschieber
- 15.: Zahnkranz
- 16.: Zahnkranz
- 17.: Stirnrad
- 18.: Stirnrad
- 19.: Grundkreis
- 21.: Schmelzkanal
- 22.: Schmelzkanal
- 23.: Pfeil
- 24.: Eintrittsöffnung
- 25.: Drehschieber
- 26.: Drehschieber
- 27.: Zahnkranz
- 28.: Zahnkranz
- 29.: Kanal
- 30.: Kanal
- 31: Drehschieber
- 32: Kanal

## Patentansprüche

1. Mehrwegventil zur Verteilung und/oder Aufteilung von mindestens einem Zulauf zugeführter Polymerschmelze während ihrer Herstellung und Verarbeitung, bei dem während jedes Betriebszustandes alle Innenkammern des Ventils von der Schmelze durchströmt werden,
**dadurch gekennzeichnet,**
**daß** zwischen einer Frontplatte (1) sowie einer Rückplatte (2), deren einander zugewandte Innenflächen plangeschliffen, gehärtet und gegebenenfalls oberflächenbehandelt sind, und die mit den jeweiligen Durchtrittsöffnungen für Eintritt (8, 24) und Austritt (9, 10) der Polymerschmelzen versehen sind, mindestens ein planparallel geschliffener, gehärteter sowie gegebenenfalls oberflächenbehandelter Drehschieber (6, 13, 14, 25, 26) drehbar auf einem Achsbolzen (5) gelagert ist, und daß die Drehschieber mit kreis- oder kreissegmentförmigen Kanälen (11, 12, 21, 22, 29, 30) versehen sind, deren Breite und Endrundung der lichten Weite der Durchtrittsöffnungen entspricht, und deren Mittellinie der die Durchtrittsöffnungen aufweisende Teilkreis (19) ist, und deren Stellung entsprechend der gewünschten Fließrichtung der Polymerschmelze positionierbar ist, wobei die Frontplatte (1) sowie die Rückplatte (2) mittels von Spannbolzen (3) und Spannmuttern (4) derart gegen die Drehschieber verspannbar sind, daß zwar einerseits eine völlige Abdichtung der Schmelzekanäle nach außen erfolgt, jedoch andererseits die Drehfähigkeit und Einstellbarkeit der Drehschieber erhalten bleibt.

2. Vorrichtung nach Anspruch 1,
**gekennzeichnet durch,**
einen ihr zugeordneten Drehschieber (6).

3. Vorrichtung nach Anspruch 1,
**gekennzeichnet durch,**
zwei ihr zugeordnete Drehschieber (13, 14; 25, 26).

4. Vorrichtung nach Ansprüchen 1 bis 3,
**dadurch gekennzeichnet,**
**daß** der Stellweg von Drehschiebern (13, 14) durch Anschläge begrenzt und fixierbar ist.

5. Vorrichtung nach Ansprüchen 1 bis 4,
**dadurch gekennzeichnet,**
**daß** Drehschieber (13, 14) als Stellorgan jeweils einen Außenzahnkranz (15, 16) oder Mitnehmerklinken aufweisen.

6. Vorrichtung nach Ansprüchen 1 bis 5,
**dadurch gekennzeichnet,**
**daß** sie zwei Eintrittsöffnungen (8, 24) sowie zwei Austrittsöffnungen (9, 10) aufweist.

7. Vorrichtung nach Ansprüchen 1 bis 6,
**dadurch gekennzeichnet,**
**daß** der Antrieb von Drehschiebern (13, 14) über in deren Zahnkränze (15, 16) eingreifende Stirnräder (17, 18) bewirkbar ist.

8. Vorrichtung nach Ansprüchen 1 bis 7,
**dadurch gekennzeichnet,**
**daß** der Stellantrieb der Drehschieber (13, 14) mittels Stellhebel und Ratsche oder hydraulisch bewegbar ist.

9. Verfahren zum Betriebe von Mehrwegventilen nach Ansprüchen 1 bis 8,
**dadurch gekennzeichnet,**
**daß** Drehschieber in zeitlicher Taktfolge selbsttätig mindestens geringe Vorwärts- und Rückwärtsbewegungen bewirken, um jede Gefahr des Festbrennens von Ablagerungen der Schmelze auf den Dichtflächen zu unterbinden.
